(19) Europäisches Patentamt
European Patent Office
Office européen des brevets

(11) **EP 4 668 633 A1**

(12) **EUROPEAN PATENT APPLICATION**
published in accordance with Art. 153(4) EPC

(43) Date of publication:
**24.12.2025  Bulletin 2025/52**

(21) Application number: **24784120.8**

(22) Date of filing: **26.03.2024**

(51) International Patent Classification (IPC):
***H04L 1/1812*** (2023.01)

(86) International application number:
**PCT/CN2024/083917**

(87) International publication number:
**WO 2024/208035 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **07.04.2023  CN 202310384560**

(71) Applicant: **ZTE Corporation**
**Shenzhen, Guangdong  518057 (CN)**

(72) Inventors:
• **CHEN, Jie**
**Shenzhen, Guangdong 518057 (CN)**
• **LU, Youxiong**
**Shenzhen, Guangdong 518057 (CN)**
• **MIAO, Ting**
**Shenzhen, Guangdong 518057 (CN)**
• **XING, Weimin**
**Shenzhen, Guangdong 518057 (CN)**
• **HU, Yuzhou**
**Shenzhen, Guangdong 518057 (CN)**
• **HE, Haigang**
**Shenzhen, Guangdong 518057 (CN)**
• **BI, Feng**
**Shenzhen, Guangdong 518057 (CN)**

(74) Representative: **Aipex B.V.**
**Vestdijk 51**
**5611 CA Eindhoven (NL)**

(54) **FEEDBACK RESOURCE DETERMINATION METHOD, COMMUNICATION NODE, AND STORAGE MEDIUM**

(57) Provided are a feedback resource determination method, a communication node, and a storage medium. The feedback resource determination method includes the following: In each resource block set included in a data resource pool, a first feedback resource set corresponding to each subband is determined, where the first feedback resource set includes at least one feedback resource, the at least one feedback resource includes K dedicated PRBs, and K is a positive integer; based on subband information and resource block set information of received data, a second feedback resource set is determined, where the second feedback resource set includes at least one first feedback resource set; and a feedback resource is determined in the second feedback resource set, and physical sidelink feedback information is transmitted through N shared PRBs and the feedback resource, where N is a positive integer.

Determine, in each resource block set included in a data resource pool, a first feedback resource set corresponding to each subband, where the first feedback resource set includes at least one feedback resource, the at least one feedback resource includes K dedicated PRBs, and K is a positive integer — S110

Determine, based on subband information and resource block set information of received data, a second feedback resource set, where the second feedback resource set includes at least one first feedback resource set — S120

Determine a feedback resource in the second feedback resource set and transmit physical sidelink feedback information through N shared PRBs and the feedback resource, where N is a positive integer — S130

**FIG. 3**

**EP 4 668 633 A1**

**Description**

TECHNICAL FIELD

This application relates to the field of wireless communication technology, for example, to a feedback resource determination method, a communication node, and a storage medium.

BACKGROUND

When communication occurs on unlicensed spectrum, some regions have requirements for Occupied Channel Bandwidth (OCB) and Power Spectral Density (PSD). Specifically, the occupied channel bandwidth of a device must be at least 80% of the Listen Before Talk (LBT) channel bandwidth (20 MHz), and the transmit power of the device within a specified bandwidth must not exceed the PSD limit (for example, 10 mW/MHz).
When Sidelink (SL) devices transmit on the physical sidelink feedback channel (PSFCH), the traditional New Radio Release-16/Release-17 (NR Rel-16/Rel-17) SL PSFCH format cannot meet the OCB requirements. Therefore, a method for determining a PSFCH feedback resource that can ensure SL devices consistently meet the OCB requirements during PSFCH transmission is required.

SUMMARY

This application provides a feedback resource determination method, a communication node, and a storage medium.
An embodiment of this application provides a feedback resource determination method. The method is applied to a first node and includes the following: In each resource block set included in a data resource pool, a first feedback resource set corresponding to each subband is determined, where the first feedback resource set includes at least one feedback resource, the at least one feedback resource includes K dedicated physical resource blocks (PRBs), and K is a positive integer; based on subband information and resource block set information of received data, a second feedback resource set is determined, where the second feedback resource set includes at least one first feedback resource set; and a feedback resource is determined in the second feedback resource set, and physical sidelink feedback information is transmitted through N shared PRBs and the feedback resource, where N is a positive integer.
An embodiment of this application also provides a communication node. The communication node includes a memory, a processor, and a computer program stored in the memory and executable on the processor, where the processor, when executing the computer program, implements the preceding feedback resource determination method.
An embodiment of this application also provides a computer-readable storage medium, which is configured to store a computer program that, when executed by a processor, implements the preceding feedback resource determination method.

BRIEF DESCRIPTION OF DRAWINGS

FIG. 1 is a diagram of a resource distribution according to an embodiment.

FIG. 2 is a diagram of a feedback resource distribution for a PSFCH according to an embodiment.

FIG. 3 is a flowchart of a feedback resource determination method according to an embodiment.

FIG. 4 is a diagram illustrating that PRBs available for PSFCH transmission are grouped according to an embodiment.

FIG. 5 is another diagram illustrating that PRBs available for PSFCH transmission are grouped according to an embodiment.

FIG. 6 is a diagram illustrating that feedback resources are determined according to an embodiment.

FIG. 7 is another diagram illustrating that feedback resources are determined according to an embodiment.

FIG. 8 is yet another diagram illustrating that feedback resources are determined according to an embodiment.

FIG. 9 is a diagram illustrating that a shared PRB is punctured according to an embodiment.

FIG. 10 is another diagram illustrating that a shared PRB is punctured according to an embodiment.

FIG. 11 is a diagram illustrating that 2-bit HARQ information is fed back using PSFCH format 2 according to an embodiment.

FIG. 12 is a diagram illustrating that PSFCH interlaces are frequency-divided into two groups according to an embodiment.

FIG. 13 is a diagram illustrating that PSFCH interlaces are frequency-divided into two groups for ACK and NACK feedback according to an embodiment.

FIG. 14 is a diagram illustrating the structure of a feedback resource determination apparatus according to an embodiment.

FIG. 15 is a diagram illustrating the hardware structure of a communication node according to an embodiment.

DETAILED DESCRIPTION

This application is described in conjunction with drawings and embodiments. The specific embodiments described herein are intended to explain this application. For ease of description, only parts related to this application are illustrated in the drawings.

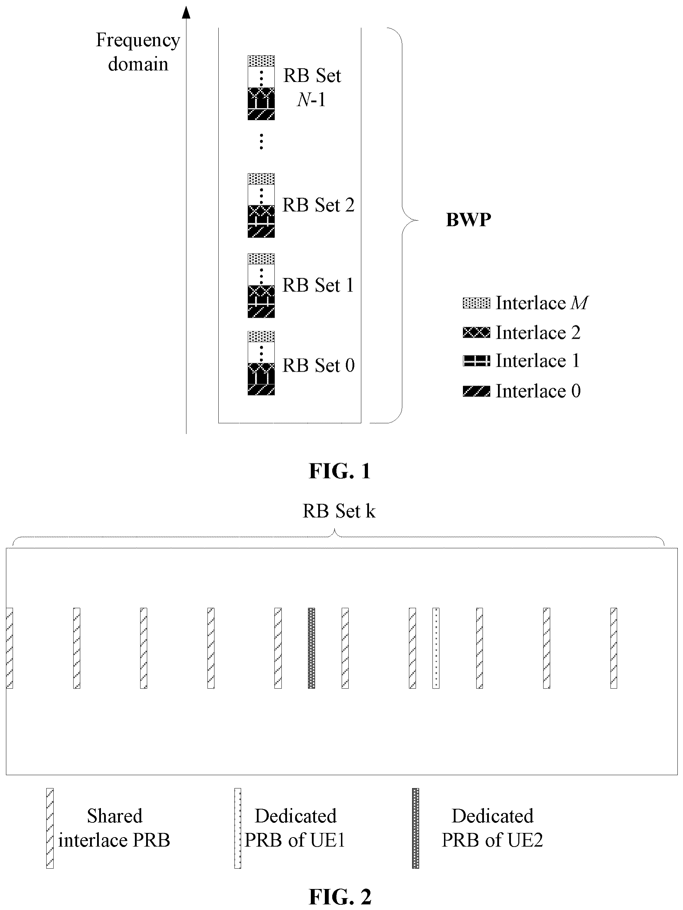

In New Radio in Unlicensed Spectrum (NR-U), $M$ consecutive interlaces are defined on a carrier. Resource blocks (RBs) within each interlace are distributed at equal intervals, and different interlaces present a comb-like distribution in the frequency domain, numbered from 0 to $M-1$. In the frequency domain, N consecutive resource block sets (RB Sets) are also defined within a Bandwidth Part (BWP), numbered from 0 to $N-1$. FIG. 1 is a diagram of a resource distribution according to an embodiment. As shown in FIG. 1, one RB Set is approximately 20 MHz, corresponding to one LBT bandwidth. A user equipment (UE) performs data transmission on at least one interlace in one RB Set, which can meet the OCB requirements while maximizing the transmission power of the UE under PSD constraints. When data resources are indicated, NR-U adopts a two-level indication approach, that is, X+Y, where X represents the interlace used by the physical uplink sidelink channel (PUSCH) resources, and Y represents the consecutive RB Sets used by the PUSCH resources. Thus, the UE may determine the resource position of the data within the BWP based on the indication information.

Sidelink communication supports unicast, multicast, and broadcast. For unicast and multicast, the 3rd Generation Partnership Project (3GPP) protocol supports enabling Hybrid Automatic Repeat Request (HARQ) feedback. For unicast, Acknowledgement (ACK)/Non-Acknowledgement (NACK) feedback is supported. For multicast, two types of feedback are supported, that is, NACK-only feedback and ACK/NACK feedback for data by group members. Regardless of the feedback method, the PSFCH feedback resource corresponding to each received physical sidelink shared channel (PSSCH) of a receiving UE is uniquely determined based on configuration and preconfiguration signaling, as well as predefined rules, and the PSFCH is carried on one PRB in the frequency domain for transmission.

Unicast is used as an example. Assuming SL HARQ feedback is enabled, the receiving UE provides feedback for each PSSCH transmission of the transmitting end on a uniquely determined feedback resource. The method for determining the PSFCH feedback resource is as follows: First, the UE determines the slot containing the feedback resource in the SL communication resource pool based on the configured or preconfigured PSFCH period, where the feedback slot is the PSFCH slot that satisfies the minimum feedback delay and is closest to the PSSCH. Based on the time-frequency position of the PSSCH transmission and the unicast or multicast attributes of the transmitted data, the receiving UE maps a uniquely determined corresponding feedback resource set within the PSFCH slot. A feedback resource set includes multiple feedback resources, and the final feedback resource of each receiving UE is determined by the Source ID of the transmitting UE and the Member ID of the receiving UE. It can be seen that for each transmit-receive link requiring feedback, the receiving UE uniquely determines one feedback resource from a feedback resource set based on the resource pool configuration.

In SL-U, when an SL device transmits a PSFCH, on the symbols used for PSFCH transmission, each RB Set has one shared interlace and K dedicated PRBs. FIG. 2 is a diagram of a feedback resource distribution for a PSFCH according to an embodiment. As shown in FIG. 2, K = 1 is used as an example. Each UE, during PSFCH transmission, simultaneously transmits signals on the shared interlace PRBs and dedicated PRB resources of the UE. Therefore, a method for determining a PSFCH feedback resource that can ensure SL devices consistently meet the OCB requirements during PSFCH transmission is required.

When traditional NR SL transmits a PSFCH on one PRB in the frequency domain, the maximum transmit power of the UE may be used. When a device uses K dedicated PRBs to transmit a PSFCH, the K PRBs may be subject to PSD restrictions, limiting the PSFCH transmission performance of the UE. Therefore, a feedback resource determination method is needed to determine K dedicated PRBs in the frequency domain to ensure the transmission performance of the PSFCH.

Additionally, when a UE uses one shared interlace and K dedicated PRBs to transmit a PSFCH, the PSFCH power is likely to be affected by the shared interlace or PSD restrictions. When the dedicated PRBs of the PSFCH and the shared interlace are within 1 MHz, to ensure the power of the dedicated PRBs, the PRBs of the shared interlace within 1 MHz may be punctured. However, puncturing PRBs in the shared interlace may result in the final transmission bandwidth of the UE not meeting the OCB requirements. Therefore, it is necessary to determine whether the shared PRBs can be punctured to ensure that the PSFCH transmission of the device consistently meets the OCB requirements.

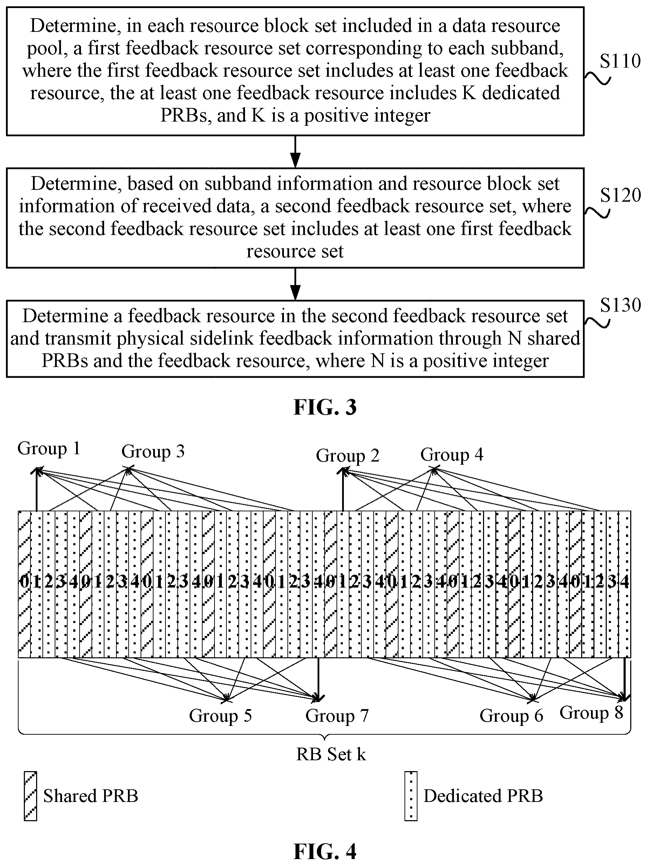

FIG. 3 is a flowchart of a feedback resource determination method according to an embodiment. The method may be applied to a first node. The first node may be a communication node receiving data, such as a UE. As shown in FIG. 3, the method provided by this embodiment includes S110, S120, and S130.

In S110, in each resource block set included in a data resource pool, a first feedback resource set corresponding to each subband is determined, where the first feedback resource set includes at least one feedback resource, the at least one feedback resource includes K dedicated PRBs, and K is a positive integer.

In S120, based on subband information and resource block set information of received data, a second feedback resource set is determined, where the second feedback resource set includes at least one first feedback resource set.

In S130, a feedback resource is determined in the second feedback resource set, and physical sidelink feedback information is transmitted through N shared PRBs and the feedback resource, where N is a positive integer.

In this embodiment, one subband in one RB Set of the data resource pool corresponds to one first feedback resource set in the RB Set, the first feedback resource set includes at least one feedback resource, and one feedback resource includes K dedicated PRBs; the second feedback resource set includes at least one first feedback resource set. The subband information may include the index and number of subbands. The resource block set information may include the index and number of resource block sets and the mapping relationship between resource block sets and subbands. Determining a feedback resource in the second feedback resource set means determining K dedicated PRBs in the second feedback resource set. An SL device (such as a UE) may transmit physical sidelink feedback information through N shared PRBs and K dedicated PRBs. The frequency domain distance between the K dedicated PRBs may exceed 1 MHz to avoid limitations on the PSFCH transmission performance of the UE due to PSD restrictions.

In an embodiment, the N shared PRBs are N PRBs included in an interlace of a predefined, preconfigured, or configured data resource block set; or the N shared PRBs are N PRBs in a data resource block set determined based on a predefined, preconfigured, or configured bitmap.

In an embodiment, the method also includes grouping PRBs, other than shared PRBs, that are available for transmitting physical sidelink feedback information in each resource block set, where every K PRBs form a group, and remaining PRBs fewer than K are not used for transmitting physical sidelink feedback information.

In an embodiment, grouping the PRBs, other than the shared PRBs, that are available for transmitting the physical sidelink feedback information in each resource block set includes the following: for PRBs, other than shared PRBs, that are available for transmitting physical sidelink feedback information in each resource block set, grouping, according to an interlace index, ungrouped PRBs within an interlace into groups of K PRBs in order of PRB indices, where X remaining PRBs in the interlace and Y PRBs in the next interlace form a group, where X < K, Y < K, and X + Y = K.

In an embodiment, determining, in each resource block set included in the data resource pool, the first feedback resource set corresponding to each subband includes allocating $M_{\text{subch, slot}}^{\text{PSFCH}}$ groups of PRBs with a group index of

$$\left[\left(i + j \cdot N_{\text{PSSCH}}^{\text{PSFCH}}\right) \cdot M_{\text{subch, slot}}^{\text{PSFCH}}, \left(i + 1 + j \cdot N_{\text{PSSCH}}^{\text{PSFCH}}\right) \cdot M_{\text{subch, slot}}^{\text{PSFCH}} - 1\right]$$ in $M_{\text{PRB, set}}^{\text{PSFCH}}$ groups of PRBs in each resource block set to a subband $j$ in a slot $i$ as a first feedback resource set corresponding to the subband $j$ in the slot $i$,

where a group index of the $M_{\text{PRB, set}}^{\text{PSFCH}}$ groups of PRBs ranges from 0 to

$M_{\text{PRB, set}}^{\text{PSFCH}} - 1$, $M_{\text{subch, slot}}^{\text{PSFCH}} = M_{\text{PRB, set}}^{\text{PSFCH}} / \left(N_{\text{subch}} \cdot N_{\text{PSSCH}}^{\text{PSFCH}}\right)$, $0 \leq i < N_{\text{PSSCH}}^{\text{PSFCH}}$, $0 \leq j < N_{\text{subch}}$, $N_{\text{subch}}$ is

the number of subbands in the resource block set, $N_{\text{PSSCH}}^{\text{PSFCH}}$ is the PSFCH period in the data resource pool, and the allocation rule is to prioritize ascending order of $i$ and then ascending order of $j$.

In an embodiment, determining a second feedback resource set based on the subband information and resource block set information of the received data includes the following: for received data including M resource block sets and H subbands, using a first feedback resource set corresponding to a first subband in a first resource block set as the second feedback resource set, where the number of groups in the second feedback resource set is $M_{\text{subch, slot}}^{\text{PSFCH}}$; or for received data including M resource block sets and H subbands, using all first feedback resource sets corresponding to each subband in each resource block set among the M resource block sets and the H subbands as the second feedback resource set, where the number of groups in the second feedback resource set is $\mathrm{M*H*}M_{\mathrm{subch,\,slot}}^{\mathrm{PSFCH}}$ and M and H are each a positive integer.

In an embodiment, determining a feedback resource in the second feedback resource set includes determining, according to a resource determination rule, a group of PRBs from the second feedback resource set as the K dedicated PRBs.

In an embodiment, the method also includes dividing PRBs, other than shared PRBs, that are available for transmitting physical sidelink feedback information in each resource block set into K groups with an equal number of PRBs according to PRB index order, where remaining PRBs fewer than K are not used for transmitting physical sidelink feedback information.

In an embodiment, determining, in each resource block set included in the data resource pool, the first feedback resource set corresponding to each subband includes allocating $M_{\mathrm{subch,\,slot}}^{\mathrm{PSFCH}}$ PRBs with an index of $\left[\left(i+j\cdot N_{\mathrm{PSSCH}}^{\mathrm{PSFCH}}\right)\cdot M_{\mathrm{subch,\,slot}}^{\mathrm{PSFCH}},\left(i+1+j\cdot N_{\mathrm{PSSCH}}^{\mathrm{PSFCH}}\right)\cdot M_{\mathrm{subch,\,slot}}^{\mathrm{PSFCH}}-1\right]$ in $M_{\mathrm{PRB,\,set}}^{\mathrm{PSFCH}}$ PRBs in each group in each resource block set to a subband j in a slot $i$ as the first feedback resource set corresponding to the subband $j$ in the slot $i$, where an index of the $M_{\mathrm{PRB,\,set}}^{\mathrm{PSFCH}}$ PRBs ranges from 0 to $M_{\mathrm{PRB,\,set}}^{\mathrm{PSFCH}}-1$, $M_{\mathrm{subch,\,slot}}^{\mathrm{PSFCH}}=M_{\mathrm{PRB,\,set}}^{\mathrm{PSFCH}}/\left(N_{\mathrm{subch}}\cdot N_{\mathrm{PSSCH}}^{\mathrm{PSFCH}}\right)$, $0\leq i<N_{\mathrm{PSSCH}}^{\mathrm{PSFCH}}$, $0\leq j<N_{\mathrm{subch}}$, $N_{\mathrm{subch}}$ is the number of subbands in the resource block set, $N_{\mathrm{PSSCH}}^{\mathrm{PSFCH}}$ is the PSFCH period in the data resource pool, and the allocation rule is to prioritize ascending order of $i$ and then ascending order of $j$; or allocating $M_{\mathrm{subch,\,slot}}^{\mathrm{PSFCH}}$ PRBs with an index of $\left[\left(i+j\cdot N_{\mathrm{PSSCH}}^{\mathrm{PSFCH}}\right)\cdot M_{\mathrm{subch,\,slot}}^{\mathrm{PSFCH}},\left(i+1+j\cdot N_{\mathrm{PSSCH}}^{\mathrm{PSFCH}}\right)\cdot M_{\mathrm{subch,\,slot}}^{\mathrm{PSFCH}}-1\right]$ in $M_{\mathrm{PRB,\,set}}^{\mathrm{PSFCH}}$ PRBs in a first group in each resource block set to a subband j in a slot $i$ as the first feedback resource set corresponding to the subband j in the slot $i$, where the first feedback resource set is a PRB set within the first group, an index of the $M_{\mathrm{PRB,\,set}}^{\mathrm{PSFCH}}$ PRBs ranges from 0 to $M_{\mathrm{PRB,\,set}}^{\mathrm{PSFCH}}-1$, $M_{\mathrm{subch,\,slot}}^{\mathrm{PSFCH}}=M_{\mathrm{PRB,\,set}}^{\mathrm{PSFCH}}/\left(N_{\mathrm{subch}}\cdot N_{\mathrm{PSSCH}}^{\mathrm{PSFCH}}\right)$, $0\leq i<N_{\mathrm{PSSCH}}^{\mathrm{PSFCH}}$, $0\leq j<N_{\mathrm{subch}}$, $N_{\mathrm{subch}}$ is the number of subbands in the resource block set, $N_{\mathrm{PSSCH}}^{\mathrm{PSFCH}}$ is the PSFCH period in the data resource pool, and the allocation rule is to prioritize ascending order of $i$ and then ascending order of $j$.

In an embodiment, determining a second feedback resource set based on the subband information and resource block set information of the received data includes the following: for received data including M resource block sets and H subbands, using a first feedback resource set corresponding to a first subband in a first resource block set as the second feedback resource set, where the number of PRBs in a group in the second feedback resource set is $M_{\mathrm{subch,\,slot}}^{\mathrm{PSFCH}}$, corresponding to $M_{\mathrm{subch,\,slot}}^{\mathrm{PSFCH}}$ feedback resources; or for received data including M resource block sets and H subbands, using all first feedback resource sets corresponding to each subband in each resource block set among the M resource block sets and the H subbands as the second feedback resource set, where the number of PRBs in a group in the second feedback resource set is $\mathrm{H*}M_{\mathrm{subch,\,slot}}^{\mathrm{PSFCH}}$, and the second feedback resource set includes a total of $\mathrm{M*H*}M_{\mathrm{subch,\,slot}}^{\mathrm{PSFCH}}$ feedback resources, and M and H are each a positive integer.

In an embodiment, determining a feedback resource in the second feedback resource set includes determining, according to a resource determination rule, a feedback resource from the second feedback resource set, and finally determining K PRBs as the K dedicated PRBs.

In an embodiment, determining, according to a resource determination rule, a feedback resource from the second feedback resource set and finally determining the K PRBs includes determining, according to the resource determination rule, a feedback resource in the second feedback resource set, where the feedback resource includes K dedicated PRBs distributed across the K groups, and the K dedicated PRBs have the same index within each of the K groups of PRBs in the resource block set, and finally determining the K PRBs; or determining, according to the resource determination rule, a PRB with an index i in a first group of the K groups of PRBs, determining PRBs with the index i in other (K-1) groups in the resource block set as dedicated PRBs, and finally determining the K dedicated PRBs; or determining, according to the resource determination rule, a PRB with an index i in a first group of the K groups of PRBs, determining PRBs with an index $i+(m-1)*M_{\text{PRB, set}}^{\text{PSFCH}}$ in the resource block set as dedicated PRBs, and finally determining the K dedicated PRBs, where m > 1 and m ≤ K; or determining, according to the resource determination rule, a PRB with an index i in a first group of the K groups of PRBs, determining PRBs with an index $i+\text{m}*M_{\text{PRB, set}}^{\text{PSFCH}}$ in the resource block set as dedicated PRBs, and finally determining the K dedicated PRBs, where m > 0 and m ≤ K-1.

In an embodiment, the resource determination rule includes determining K PRBs or one PRB based on a resource identifier in the received data, the number of cyclic shift pairs configured or preconfigured by a system, a member identifier of a data receiving node, and the number of feedback resources in the second feedback resource set or the number of PRBs in a group in the second feedback resource set.

In an embodiment, the method also includes puncturing a shared PRB that satisfies a specific condition in a case where the bandwidth between any shared PRB in the resource block set and any of the K dedicated PRBs is less than a set threshold.

Puncturing may mean that the transmit power of the PRB is zero, or no data, signal, or channel is mapped on the PRB.

In an embodiment, in a case where the subcarrier spacing (SCS) is a first value, an n-th interlace in the resource block set is a shared PRB, and the number of shared PRBs of the n-th interlace in the resource block set is a specified value, a shared PRB that does not satisfy the specific case is not punctured in the following manners: in a case where a PRB with the largest index among the K dedicated PRBs includes an (85+n)-th PRB, retaining a (90+n)-th shared PRB without puncturing, where n ≥ 1 and n ≤ 10; in a case where a PRB with the largest index among the K dedicated PRBs includes an (85+n)-th PRB, retaining a (90+n)-th shared PRB without puncturing, where n ≥ 1 and n ≤ 10; in a case where a PRB with the smallest index among the K dedicated PRBs includes a (5+n)-th PRB, retaining an n-th shared PRB without puncturing, where n ≥ 1 and n ≤ 10; in a case where a PRB with the smallest index among the K dedicated PRBs includes a (4+n)-th PRB, retaining an n-th shared PRB without puncturing, where n ≥ 1 and n ≤ 10; and in a case where a PRB with the smallest index among the K dedicated PRBs includes a (3+n)-th PRB, retaining an n-th shared PRB without puncturing, where n ≥ 1 and n ≤ 10.

In an embodiment, in a case where the SCS is a second value, an x-th interlace in the resource block set is a shared interlace, and the number of shared PRBs of the x-th interlace in the resource block set is a specified value, a shared PRB that does not satisfy the specific case is not punctured in the following manners: in a case where a PRB with the largest index among the K dedicated PRBs includes a (43+m)-th PRB, retaining a (45+m)-th shared PRB without puncturing, where x ≥ 1 and x ≤ 5; and in a case where a PRB with the smallest index among the K dedicated PRBs includes a (2+m)-th PRB, retaining an m-th shared PRB without puncturing, where x ≥ 1 and x ≤ 5.

An exemplary description of the preceding feedback resource determination method is provided below.

For cases where the feedback resources of a PSFCH include more than one PRB, the feedback resource determination process is as follows:

When a UE uses shared interlace PRBs and dedicated PRBs to transmit a PSFCH in SL-U, the transmit power within a 1 MHz bandwidth must not exceed the PSD limit. Therefore, it can be considered that the UE uses multiple dedicated PRBs in the frequency domain for PSFCH transmission, and the frequency domain distance between the multiple dedicated PRBs exceeds 1 MHz.

Solution 1

Within an RB Set, PRBs available for PSFCH transmission, excluding the shared interlace PRBs, are grouped. The grouping method is based on the interlace index, where every K PRBs within an interlace are grouped together, and the remaining PRBs fewer than K in the interlace are combined with PRBs in the next available interlace to form a group, until complete.

Within the RB Set, $\left[\left(i + j \cdot N_{\text{PSSCH}}^{\text{PSFCH}}\right) \cdot M_{\text{subch, slot}}^{\text{PSFCH}}, \left(i + 1 + j \cdot N_{\text{PSSCH}}^{\text{PSFCH}}\right) \cdot M_{\text{subch, slot}}^{\text{PSFCH}} - 1\right]$ groups of PRBs in the frequency domain are allocated to the UE for candidate PSFCH transmission, where each group of PRBs includes K PRBs.

Moreover, $M_{\text{subch, slot}}^{\text{PSFCH}} = M_{\text{PRB, set}}^{\text{PSFCH}} / \left(N_{\text{subch}} \cdot N_{\text{PSSCH}}^{\text{PSFCH}}\right)$, $0 \le i < N_{\text{PSSCH}}^{\text{PSFCH}}$, $0 \le j < N_{\text{subch}}$, and the allocation rule prioritizes ascending order of $i$ and then ascending order of j. The UE expects $M_{\text{PRB, set}}^{\text{PSFCH}}$ to be a multiple of $N_{\text{subch}} \cdot N_{\text{PSSCH}}^{\text{PSFCH}}$, where $M_{\text{PRB, set}}^{\text{PSFCH}}$ represents the number of PSFCH PRB groups in the RB Set, $N_{\text{subch}}$ is the number of subbands in the resource block set, and $N_{\text{PSSCH}}^{\text{PSFCH}}$ is the PSFCH period in the data resource pool.

The UE determines one group of PRBs from

$$\left[\left(i + j \cdot N_{\text{PSSCH}}^{\text{PSFCH}}\right) \cdot M_{\text{subch, slot}}^{\text{PSFCH}}, \left(i + 1 + j \cdot N_{\text{PSSCH}}^{\text{PSFCH}}\right) \cdot M_{\text{subch, slot}}^{\text{PSFCH}} - 1\right]$$ groups of PRBs according to the resource determination rule, where the K PRBs in the group of PRBs are the dedicated PRB feedback resources of the receiving UE.

Each RB Set follows the preceding grouping and mapping rules.

FIG. 4 is a diagram illustrating that PRBs available for PSFCH transmission are grouped according to an embodiment. As shown in FIG. 4, SCS = 30 kHz, RB Set k includes 50 PRBs, and it is assumed that K = 5.

According to the interlace index, the first 5 PRBs in interlace 1 form the first group of feedback resources, the last 5 PRBs in interlace 1 form the second group of feedback resources, the first 5 PRBs in interlace 2 form the third group of feedback resources, the last 5 PRBs in interlace 2 form the fourth group of feedback resources, the first 5 PRBs in interlace 3 form the fifth group of feedback resources, the last 5 PRBs in interlace 3 form the sixth group of feedback resources, the first 5 PRBs in interlace 4 form the seventh group of feedback resources, and the last 5 PRBs in interlace 4 form the eighth group of feedback resources.

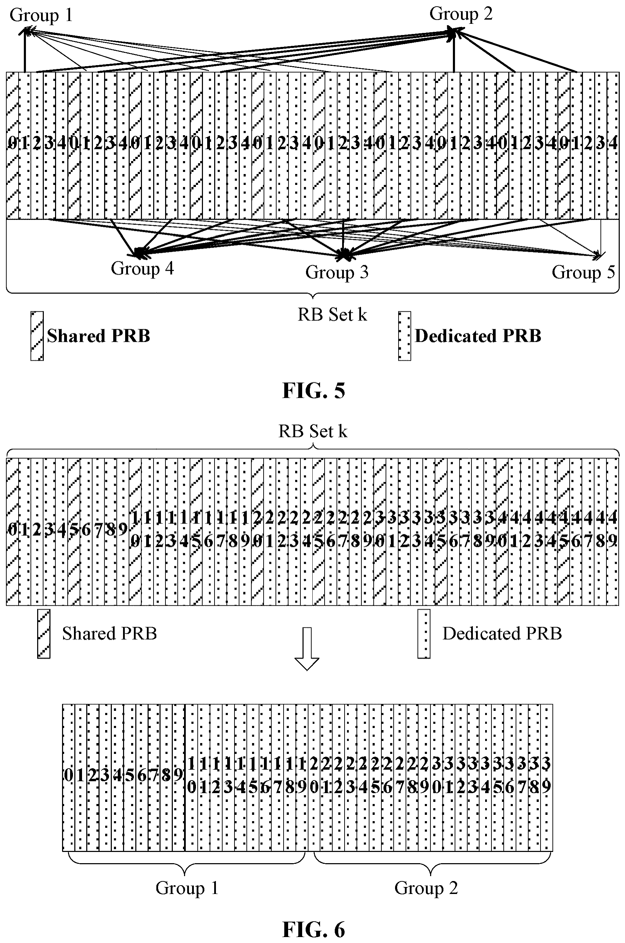

FIG. 5 is another diagram illustrating that PRBs available for PSFCH transmission are grouped according to an embodiment. As shown in FIG. 5, SCS = 30 kHz, RB Set k includes 50 PRBs, and it is assumed that k = 7.

According to the interlace index, the first 7 PRBs in interlace 1 form the first group of feedback resources, the last 3 PRBs in interlace 1 and the first 4 PRBs in interlace 2 form the second group of feedback resources, the last 6 PRBs in interlace 2 and the first PRB in interlace 3 form the third group of feedback resources, the 2nd to 8th PRBs in interlace 3 form the fourth group of feedback resources, and the last 2 PRBs in interlace 3 and the first 5 PRBs in interlace 4 form the fifth group of feedback resources.

The last 5 PRBs in interlace 4 are remaining PRBs and are not used for PSFCH transmission.

Solution 2

Within an RB Set, PRBs available for PSFCH transmission, excluding the shared interlace PRBs, are divided into K groups, and each group contains an equal number of PRBs. It is assumed that the number of PRBs in each group is $M_{\text{PRB, set}}^{\text{PSFCH}}$, indexed from 0 to $M_{\text{PRB, set}}^{\text{PSFCH}} - 1$. Within the RB Set, the $\left[\left(i + j \cdot N_{\text{PSSCH}}^{\text{PSFCH}}\right) \cdot M_{\text{subch, slot}}^{\text{PSFCH}}, \left(i + 1 + j \cdot N_{\text{PSSCH}}^{\text{PSFCH}}\right) \cdot M_{\text{subch, slot}}^{\text{PSFCH}} - 1\right]$ PRBs in the first group in the frequency domain are allocated to the UE for candidate PSFCH transmission, $M_{\text{subch, slot}}^{\text{PSFCH}} = M_{\text{PRB, set}}^{\text{PSFCH}} / \left(N_{\text{subch}} \cdot N_{\text{PSSCH}}^{\text{PSFCH}}\right)$, $0 \le i < N_{\text{PSSCH}}^{\text{PSFCH}}$, $0 \le j < N_{\text{subch}}$, and the allocation rule prioritizes ascending order of $i$ and then ascending order of j. The UE expects $M_{\text{PRB, set}}^{\text{PSFCH}}$ to be a multiple of $N_{\text{subch}} \cdot N_{\text{PSSCH}}^{\text{PSFCH}}$, where $M_{\text{PRB, set}}^{\text{PSFCH}}$ represents the number of PRBs in each of the K groups of PRBs in the RB Set, $N_{\text{subch}}$ is the number of subbands in the resource block set, and $N_{\text{PSSCH}}^{\text{PSFCH}}$ is the PSFCH period in the data resource pool.

After the receiving UE determines a PRB in a group of PRBs, the PRB resources at the same position in the other groups also become the dedicated PSFCH resources of the receiving UE, and the K dedicated resources of the receiving device are finally determined.

The PRBs available for PSFCH transmission, excluding the shared interlace PRBs, may be numbered together, such as indexed from PRB 0 to PRB $K * M_{\text{PRB, set}}^{\text{PSFCH}} - 1$. If the PSFCH resource determined in the first group is PRB i, then the feedback resource in the m-th group is PRB $i + (m-1) * M_{\text{PRB, set}}^{\text{PSFCH}}$, where m ≥ 1 and m ≤ K, and the K dedicated resources of the receiving device are finally determined.

After the PRBs available for PSFCH transmission, excluding the shared interlace PRBs, are divided into K groups, the PRBs in each group are numbered from PRB 0 to PRB $M_{\text{PRB, set}}^{\text{PSFCH}} - 1$. If the feedback resource determined in the first group is PRB i, then the feedback resource in the m-th group is also PRB i, and the K dedicated resources of the receiving device are finally determined.

Each RB Set follows the preceding grouping and mapping rules.

FIG. 6 is a diagram illustrating that feedback resources are determined according to an embodiment. As shown in FIG. 6, SCS = 30 kHz, the RB Set k includes 50 PRBs, and it is assumed that K = 2.

After 10 shared PRBs in RB Set k are excluded, the remaining 40 available PRBs are numbered from 0 to 39 and divided into two groups. The first 20 PRBs (PRB 0 to PRB 19) in the 40 available PRBs form the first group, and the last 20 PRBs (PRB 20 to PRB 39) form the second group.

When the receiving UE determines PRB 4 as a feedback resource in the first group according to the resource determination rule, PRB 24 in the second group also becomes a feedback resource.

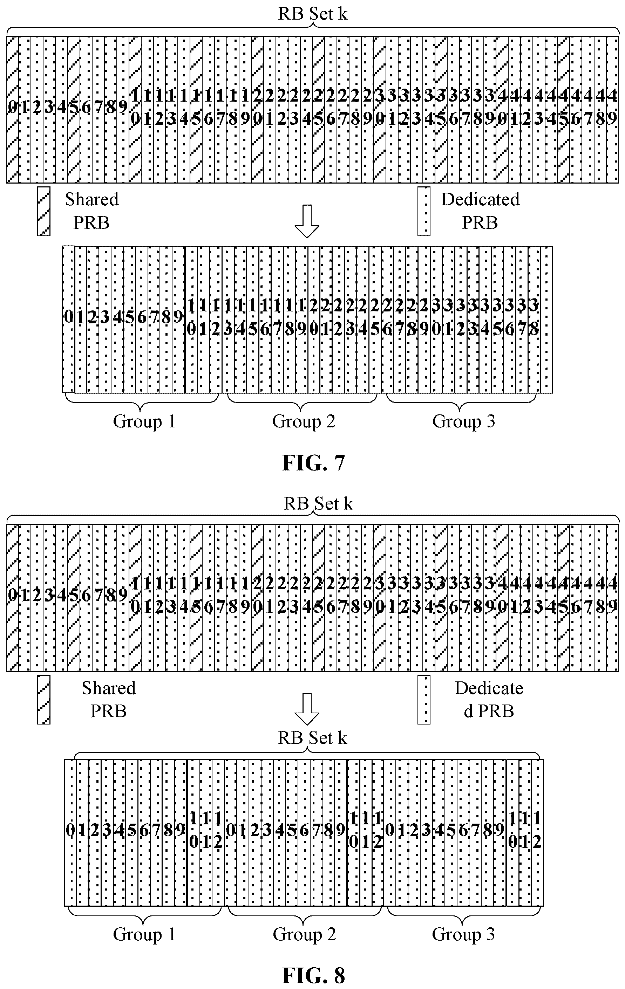

FIG. 7 is another diagram illustrating that feedback resources are determined according to an embodiment. As shown in FIG. 7, SCS = 30 kHz, the RB Set k includes 50 PRBs, and it is assumed that K = 3.

After 10 shared PRBs in RB Set k are excluded, the first 39 of the remaining 40 available PRBs are divided into three groups, and the last PRB is a remaining PRB that is not used for PSFCH transmission. These 39 PRBs are numbered from PRB 0 to PRB 38.

When the receiving UE determines PRB 4 as a PSFCH feedback resource in the first group according to the resource determination rule, PRB 17 in the second group and PRB 30 in the third group also become PSFCH feedback resources.

FIG. 8 is yet another diagram illustrating that feedback resources are determined according to an embodiment. As shown in FIG. 8, SCS = 30 kHz, the RB Set k includes 50 PRBs, and it is assumed that K = 3.

After 10 shared PRBs in RB Set k are excluded, the first 39 of the remaining 40 available PRBs are divided into three groups, with 13 PRBs in each group numbered from PRB 0 to PRB 12, and the last PRB is a remaining PRB that is not used for PSFCH transmission.

When the receiving UE determines PRB 4 as a feedback resource in the first group according to the resource determination rule, PRB 4 in the second group and PRB 4 in the third group also become PSFCH feedback resources.

Based on the above, after the positions of the K dedicated PRBs for a PSFCH are determined, the K dedicated PRBs, due to their frequency domain spacing, may be considered free from PSD restrictions. However, if the frequency domain distance between a dedicated PRB and a shared PRB is within 1 MHz, the power of the dedicated PRB may be affected by the shared PRB. Puncturing the transmission of the shared PRB may be considered to ensure the power of the dedicated PRB. However, if the frequency domain distance between the shared PRB at the edge of the RB Set and a dedicated PRB is within 1 MHz, puncturing the shared PRB at the edge of the RB Set may cause the PSFCH transmission bandwidth to fail to meet the OCB requirements. Therefore, certain special shared PRBs at the edge that may cause the OCB transmission requirements to be unmet if punctured must not be punctured.

Within RB Set k, when SCS = 15 kHz, the following cases are included:

1. When the n-th interlace is a shared interlace and the number of PRBs in the interlace in the RB Set is 10, if the PRB with the largest index among the dedicated PRBs includes the (85+n)-th PRB, the (90+n)-th shared PRB must not be punctured, where $n \geq 1$ and $n \leq 10$.

2. When the n-th interlace is a shared interlace and the number of PRBs in the interlace in the RB Set is 10, if the PRB with the largest index among the dedicated PRBs includes the (86+n)-th PRB, the (90+n)-th shared PRB must not be punctured, where $n \geq 1$ and $n \leq 10$.

3. When the n-th interlace is a shared interlace and the number of PRBs in the interlace in the RB Set is 10, if the PRB with the largest index among the dedicated PRBs includes the (87+n)-th PRB, the (90+n)-th shared PRB must not be punctured, where $n \geq 1$ and $n \leq 10$.

4. When the n-th interlace is a shared interlace and the number of PRBs in the interlace in the RB Set is 10, if the PRB with the smallest index among the dedicated PRBs includes the (5+n)-th PRB, the n-th shared PRB must not be punctured, where $n \geq 1$ and $n \leq 10$.

5. When the n-th interlace is a shared interlace and the number of PRBs in the interlace in the RB Set is 10, if the PRB with the smallest index among the dedicated PRBs includes the (4+n)-th PRB, the n-th shared PRB must not be punctured, where $n \geq 1$ and $n \leq 10$.

6. When the n-th interlace is a shared interlace and the number of PRBs in the interlace in the RB Set is 10, if the PRB with the smallest index among the dedicated PRBs includes the (3+n)-th PRB, the n-th shared PRB must not be punctured, where $n \geq 1$ and $n \leq 10$.

Within RB Set k, when SCS = 30 kHz, the following cases are included:

1. When the x-th interlace is a shared interlace and the number of PRBs in the interlace in the RB Set is 10, if the PRB with the largest index among the dedicated PRBs includes the (43+m)-th PRB, the (45+m)-th PRB must not be punctured, where $x \geq 1$ and $x \leq 5$.

2. When the x-th interlace is a shared interlace and the number of PRBs in the interlace in the RB Set is 10, if the PRB with the smallest index among the dedicated PRBs includes the (2+x)-th PRB, the x-th PRB must not be punctured, where x ≥ 1 and x ≤ 5.

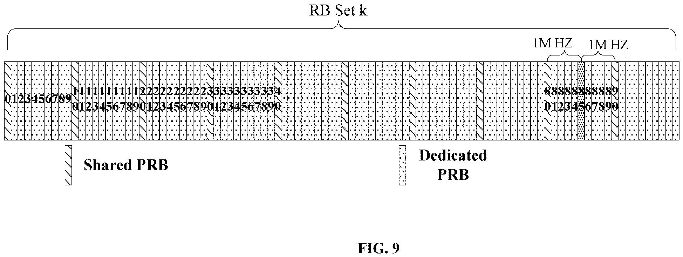

FIG. 9 is a diagram illustrating that a shared PRB is punctured according to an embodiment. As shown in FIG. 9, SCS = 15 kHz, the RB Set includes 100 PRBs, and the shared PRBs are the first interlace in the RB Set.

When PSFCH feedback resources of the UE include PRB 85, the 81st shared PRB (PRB 80) is punctured and not transmitted, and the 90th shared PRB (PRB 90) is not punctured.

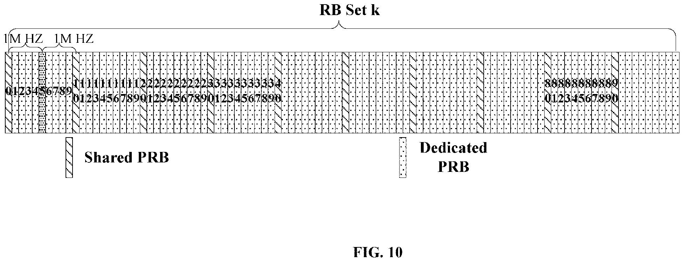

FIG. 10 is another diagram illustrating that a shared PRB is punctured according to an embodiment. As shown in FIG. 10, SCS = 15 kHz, the RB Set includes 100 PRBs, and the shared PRBs are the first interlace in the RB Set.

When PSFCH feedback resources of the UE include PRB 5, the 11th shared PRB (PRB 10) is punctured and not transmitted, and the 1st shared PRB (PRB 0) is not punctured.

In addition, when PSFCH transmission uses one interlace in the RB Set, all PRB resources included in the PSFCH may feed back 1-bit or multiple-bit feedback information based on indication information.

In an embodiment, a new PSFCH format may be used to feed back multiple bits.

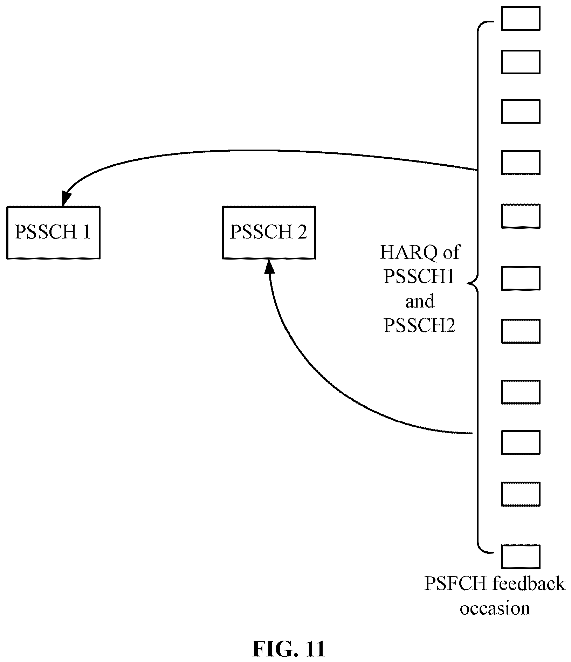

FIG. 11 is a diagram illustrating that 2-bit HARQ information is fed back using PSFCH format 2 according to an embodiment. As shown in FIG. 11, in this embodiment, based on the indication information of the physical sidelink control channel (PSCCH), 2-bit HARQ information is fed back using PSFCH format 2 on the PSFCH feedback resources.

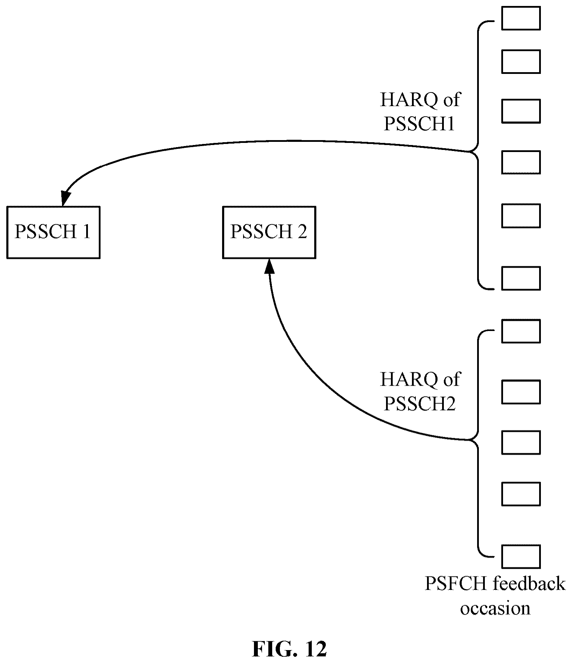

FIG. 12 is a diagram illustrating that PSFCH interlaces are frequency-divided into two groups according to an embodiment. As shown in FIG. 12, in this embodiment, the PRBs included in the PSFCH are divided into Q groups in the frequency domain (where Q is a positive integer, for example, Q = 2 in FIG. 12), with the method of frequency division feedback determined based on indication information, and each group independently feeds back 1-bit information. The correspondence between each group of feedback resources and the previous PSSCH transmission or HARQ process is determined based on configuration, preconfiguration, or predefined rules.

In an embodiment, when multiple PRBs in PSFCH transmission feed back only 1 bit, the sequence on the first PRB of the interlace carrying the PSFCH is repeated on the other PRBs in the interlace, and cyclic shift hopping is performed based on the PRB index in the interlaced resource blocks (IRBs).

In an embodiment, when multiple PRBs in PSFCH transmission feed back more than 1 bit, the sequence on the first PRB in each of the Q groups in the frequency domain is repeated on the other PRBs in the group, and cyclic shift hopping is performed based on the PRB index within the group.

In an embodiment, the cyclic shift of the sequence on the first PRB in each of the Q groups is determined based on the cyclic shift index corresponding to the ACK or NACK information of the PSSCH corresponding to the group of feedback resources, the cyclic shift pair index, and the PRB index of the first PRB within the interlace.

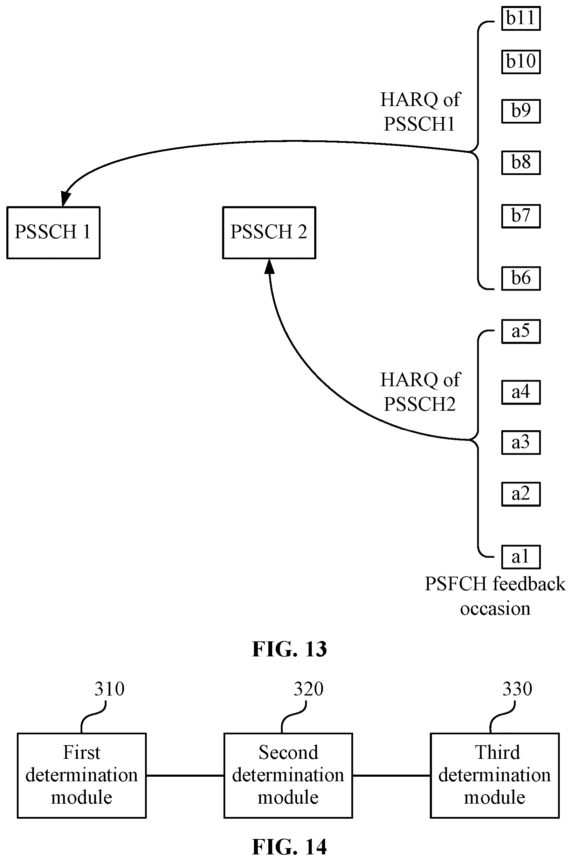

FIG. 13 is a diagram illustrating that PSFCH interlaces are frequency-divided into two groups for ACK and NACK feedback according to an embodiment. It is assumed that the feedback sequence corresponding to ACK is a and the feedback sequence corresponding to NACK is b. When PSSCH1 feedback is NACK and PSSCH2 feedback is ACK, the feedback information on the feedback resources corresponding to the PSSCH at the PSFCH feedback occasion is as shown in FIG. 13.

An embodiment of this application also provides a feedback resource determination apparatus. FIG. 14 is a diagram illustrating the structure of a feedback resource determination apparatus according to an embodiment. As shown in FIG. 14, the feedback resource determination apparatus includes a first determination module 310, a second determination module 320, and a third determination module 330.

The first determination module 310 is configured to determine, in each resource block set included in a data resource pool, a first feedback resource set corresponding to each subband, where the first feedback resource set includes at least one feedback resource, the at least one feedback resource includes K dedicated PRBs, and K is a positive integer. The second determination module 320 is configured to determine a second feedback resource set based on subband information and resource block set information of received data, where the second feedback resource set includes at least one first feedback resource set. The third determination module 330 is configured to determine feedback resource in the second feedback resource set and transmit physical sidelink feedback information through N shared PRBs and the feedback resource, where N is a positive integer.

In an embodiment, the N shared PRBs are N PRBs included in an interlace of a predefined, preconfigured, or configured data resource block set; or the N shared PRBs are N PRBs in a data resource block set determined based on a predefined, preconfigured, or configured bitmap.

In an embodiment, the apparatus also includes a first grouping module.

The first grouping module is configured to group PRBs, other than shared PRBs, that are available for transmitting physical sidelink feedback information in each resource block set, where every K PRBs form a group, and remaining PRBs fewer than K are not used for transmitting physical sidelink feedback information.

In an embodiment, the first grouping module is configured to: for PRBs, other than shared PRBs, that are available for transmitting physical sidelink feedback information in each resource block set, group, according to an interlace index, ungrouped PRBs within an interlace into groups of K PRBs in order of PRB indices, where X remaining PRBs in the interlace and Y PRBs in the next interlace form a group, where X < K, Y < K, and X + Y = K.

In an embodiment, the first determination module 310 is configured to allocate $M_{\text{subch, slot}}^{\text{PSFCH}}$ groups of PRBs with a group index of $\left[\left(i + j \cdot N_{\text{PSSCH}}^{\text{PSFCH}}\right) \cdot M_{\text{subch, slot}}^{\text{PSFCH}}, \left(i + 1 + j \cdot N_{\text{PSSCH}}^{\text{PSFCH}}\right) \cdot M_{\text{subch, slot}}^{\text{PSFCH}} - 1\right]$ in $M_{\text{PRB, set}}^{\text{PSFCH}}$ groups of PRBs in each resource block set to a subband $j$ in a slot $i$ as a first feedback resource set corresponding to the subband $j$ in the slot $i$, where a group index of the $M_{\text{PRB, set}}^{\text{PSFCH}}$ groups of PRBs ranges from 0 to $M_{\text{PRB, set}}^{\text{PSFCH}} - 1$, $M_{\text{subch, slot}}^{\text{PSFCH}} = M_{\text{PRB, set}}^{\text{PSFCH}} / \left(N_{\text{subch}} \cdot N_{\text{PSSCH}}^{\text{PSFCH}}\right)$, $0 \leq i < N_{\text{PSSCH}}^{\text{PSFCH}}$, $0 \leq j < N_{\text{subch}}$, $N_{\text{subch}}$ is the number of subbands in the resource block set, $N_{\text{PSSCH}}^{\text{PSFCH}}$ is the PSFCH period in the data resource pool, and the allocation rule is to prioritize ascending order of $i$ and then ascending order of $j$.

In an embodiment, the second determination module 320 is configured to: for received data including M resource block sets and H subbands, use a first feedback resource set corresponding to a first subband in a first resource block set as the second feedback resource set, where the number of groups in the second feedback resource set is $M_{\text{subch, slot}}^{\text{PSFCH}}$; or for received data including M resource block sets and H subbands, use all first feedback resource sets corresponding to each subband in each resource block set among the M resource block sets and the H subbands as the second feedback resource set, where the number of groups in the second feedback resource set is $\text{M*H*}M_{\text{subch, slot}}^{\text{PSFCH}}$ and M and H are each a positive integer.

In an embodiment, the third determination module 330 is configured to determine, according to a resource determination rule, a group of PRBs from the second feedback resource set as the K dedicated PRBs.

In an embodiment, the apparatus also includes a second grouping module.

The second grouping module is configured to divide PRBs, other than shared PRBs, that are available for transmitting physical sidelink feedback information in each resource block set into K groups with an equal number of PRBs according to PRB index order, where remaining PRBs fewer than K are not used for transmitting physical sidelink feedback information.

In an embodiment, the first determination module 310 is configured to allocate $M_{\text{subch, slot}}^{\text{PSFCH}}$ PRBs with an index of $\left[\left(i + j \cdot N_{\text{PSSCH}}^{\text{PSFCH}}\right) \cdot M_{\text{subch, slot}}^{\text{PSFCH}}, \left(i + 1 + j \cdot N_{\text{PSSCH}}^{\text{PSFCH}}\right) \cdot M_{\text{subch, slot}}^{\text{PSFCH}} - 1\right]$ in $M_{\text{PRB, set}}^{\text{PSFCH}}$ PRBs in each group in each resource block set to a subband $j$ in a slot $i$ as the first feedback resource set corresponding to the subband j in the slot $i$, where an index of the $M_{\text{PRB, set}}^{\text{PSFCH}}$ PRBs ranges from 0 to $M_{\text{PRB, set}}^{\text{PSFCH}} - 1$, $M_{\text{subch, slot}}^{\text{PSFCH}} = M_{\text{PRB, set}}^{\text{PSFCH}} / \left(N_{\text{subch}} \cdot N_{\text{PSSCH}}^{\text{PSFCH}}\right)$, $0 \leq i < N_{\text{PSSCH}}^{\text{PSFCH}}$, $0 \leq j < N_{\text{subch}}$, $N_{\text{subch}}$ is the number of subbands in the resource block set, $N_{\text{PSSCH}}^{\text{PSFCH}}$ is the PSFCH period in the data resource pool, and the allocation rule is to prioritize ascending order of $i$ and then ascending order of $j$; or allocate $M_{\text{subch, slot}}^{\text{PSFCH}}$ PRBs with an index of $\left[\left(i + j \cdot N_{\text{PSSCH}}^{\text{PSFCH}}\right) \cdot M_{\text{subch, slot}}^{\text{PSFCH}}, \left(i + 1 + j \cdot N_{\text{PSSCH}}^{\text{PSFCH}}\right) \cdot M_{\text{subch, slot}}^{\text{PSFCH}} - 1\right]$ in $M_{\text{PRB, set}}^{\text{PSFCH}}$ PRBs in a first group in each resource block set to a subband j in a slot $i$ as the first feedback resource set corresponding to the subband j in the slot $i$, where the first feedback resource set is a PRB set within the first group, an index of the $M_{\text{PRB, set}}^{\text{PSFCH}}$ PRBs ranges from 0 to $M_{\text{PRB, set}}^{\text{PSFCH}} - 1$, $M_{\text{subch, slot}}^{\text{PSFCH}} = M_{\text{PRB, set}}^{\text{PSFCH}} / \left(N_{\text{subch}} \cdot N_{\text{PSSCH}}^{\text{PSFCH}}\right)$, $0 \leq i < N_{\text{PSSCH}}^{\text{PSFCH}}$, $0 \leq j < N_{\text{subch}}$, $N_{\text{subch}}$ is the number of subbands in the resource block set, $N_{\text{PSSCH}}^{\text{PSFCH}}$ is the PSFCH period in the data resource pool, and the allocation rule is to prioritize ascending order of i and then ascending order of j.

In an embodiment, the second determination module 320 is configured to: for received data including M resource block sets and H subbands, use a first feedback resource set corresponding to a first subband in a first resource block set as the second feedback resource set, where the number of PRBs in a group in the second feedback resource set is $M_{\text{subch, slot}}^{\text{PSFCH}}$, corresponding to $M_{\text{subch, slot}}^{\text{PSFCH}}$ feedback resources; or for received data including M resource block sets and H subbands, use all first feedback resource sets corresponding to each subband in each resource block set among the M resource block sets and the H subbands as the second feedback resource set, where the number of PRBs in a group in the second feedback resource set is $H*M_{\mathrm{subch,\,slot}}^{\mathrm{PSFCH}}$, and the second feedback resource set includes a total of $M*H*M_{\mathrm{subch,\,slot}}^{\mathrm{PSFCH}}$ feedback resources, and M and H are each a positive integer.

In an embodiment, the third determination module 330 is configured to determine, according to a resource determination rule, a feedback resource from the second feedback resource set, and finally determine K PRBs as the K dedicated PRBs.

In an embodiment, the third determination module is configured to determine, according to the resource determination rule, a feedback resource in the second feedback resource set, where the feedback resource includes K dedicated PRBs distributed across the K groups, and the K dedicated PRBs have the same index within each of the K groups of PRBs in the resource block set, and finally determine the K PRBs; or determine, according to the resource determination rule, a PRB with an index i in a first group of the K groups of PRBs, determine PRBs with the index i in other (K-1) groups in the resource block set as dedicated PRBs, and finally determine the K dedicated PRBs; or determine, according to the resource determination rule, a PRB with an index i in a first group of the K groups of PRBs, determine PRBs with an index $i+(\mathrm{m}-1)*M_{\mathrm{PRB,\,set}}^{\mathrm{PSFCH}}$ in the resource block set as dedicated PRBs, and finally determine the K dedicated PRBs, where m > 1 and m ≤ K; or determine, according to the resource determination rule, a PRB with an index i in a first group of the K groups of PRBs, determine PRBs with an index $i+\mathrm{m}*M_{\mathrm{PRB,\,set}}^{\mathrm{PSFCH}}$ in the resource block set as dedicated PRBs, and finally determine the K dedicated PRBs, where m > 0 and m ≤ K-1.

In an embodiment, the resource determination rule includes determining K PRBs or one PRB based on a resource identifier in the received data, the number of cyclic shift pairs configured or preconfigured by a system, a member identifier of a data receiving node, and the number of feedback resources in the second feedback resource set or the number of PRBs in a group in the second feedback resource set.

In an embodiment, the apparatus also includes a puncturing module.

The puncturing module is configured to puncture a shared PRB that satisfies a specific condition in a case where the bandwidth between any shared PRB in the resource block set and any of the K dedicated PRBs is less than a set threshold.

In an embodiment, in a case where the SCS is a first value, an n-th interlace in the resource block set is a shared PRB, and the number of shared PRBs of the n-th interlace in the resource block set is a specified value, a shared PRB that does not satisfy the specific case is not punctured in the following manners: in a case where a PRB with the largest index among the K dedicated PRBs includes an (85+n)-th PRB, retaining a (90+n)-th shared PRB without puncturing, where n ≥ 1 and n ≤ 10; in a case where a PRB with the largest index among the K dedicated PRBs includes an (85+n)-th PRB, retaining a (90+n)-th shared PRB without puncturing, where n ≥ 1 and n ≤ 10; in a case where a PRB with the smallest index among the K dedicated PRBs includes a (5+n)-th PRB, retaining an n-th shared PRB without puncturing, where n ≥ 1 and n ≤ 10; in a case where a PRB with the smallest index among the K dedicated PRBs includes a (4+n)-th PRB, retaining an n-th shared PRB without puncturing, where n ≥ 1 and n ≤ 10; and in a case where a PRB with the smallest index among the K dedicated PRBs includes a (3+n)-th PRB, retaining an n-th shared PRB without puncturing, where n ≥ 1 and n ≤ 10.

In an embodiment, in a case where the SCS is a second value, an x-th interlace in the resource block set is a shared interlace, and the number of shared PRBs of the x-th interlace in the resource block set is a specified value, a shared PRB that does not satisfy the specific case is not punctured in the following manners: in a case where a PRB with the largest index among the K dedicated PRBs includes a (43+m)-th PRB, retaining a (45+m)-th shared PRB without puncturing, where x ≥ 1 and x ≤ 5; and in a case where a PRB with the smallest index among the K dedicated PRBs includes a (2+m)-th PRB, retaining an m-th shared PRB without puncturing, where x ≥ 1 and x ≤ 5.

The feedback resource determination apparatus provided in this embodiment and the feedback resource determination method provided in the preceding embodiments belong to the same concept. For technical details not described in detail in this embodiment, reference may be made to any one of the preceding embodiments, and this embodiment has the same effects as executing the feedback resource determination method.

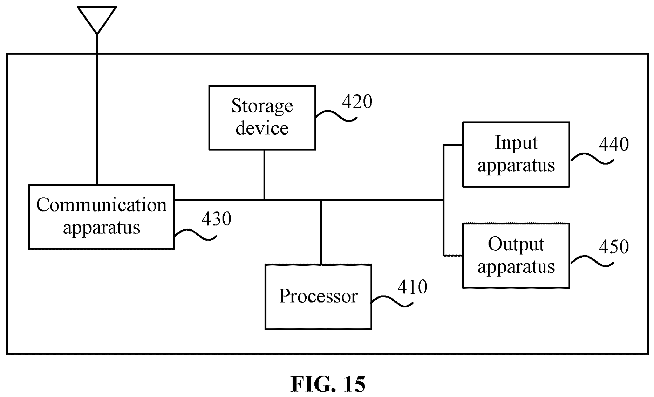

An embodiment of this application also provides a communication node. FIG. 15 is a diagram illustrating the hardware structure of a communication node according to an embodiment. As shown in FIG. 15, the communication node provided by this application includes a processor 410 and a memory 420. The communication node may include one or more processors 410, with one processor 410 shown in FIG. 15 as an example. The memory 420 is configured to store one or more programs that, when executed by the one or more processors 410, cause the one or more processors 410 to implement the feedback resource determination method as described in the embodiments of this application.

The communication node also includes a communication apparatus 430, an input apparatus 440, and an output apparatus 450.

The processor 410, the memory 420, the communication apparatus 430, the input apparatus 440, and the output apparatus 450 in the communication node may be connected via a bus or in other manners. Connection via the bus is used as an example in FIG. 15.

The input apparatus 440 may be configured to receive input digital or character information and generate key signal input related to user settings and function control of the communication node. The output apparatus 450 may include a display device, for example, a display screen.

The communication apparatus 430 may include a receiver and a transmitter. The communication apparatus 430 is configured to perform information transmission and reception communication under the control of the processor 410,

The memory 420, as a computer-readable storage medium, may be configured to store software programs, computer-executable programs, and modules, such as program instructions/modules (for example, the first determination module 310, the second determination module 320, and the third determination module 330 in the feedback resource determination apparatus) corresponding to the feedback resource determination method described in the embodiments of this application. The memory 420 may include a program storage region and a data storage region. The program storage region may store an operating system and an application program required by at least one function. The data storage region may store data or the like created according to the use of the communication node. Additionally, the memory 420 may include a high-speed random-access memory and may also include a nonvolatile memory such as at least one disk memory, flash memory, or another nonvolatile solid-state memory. In some examples, the memory 420 may include memories that are remotely disposed with respect to the processor 410, and these remote memories may be connected to the communication node via a network. Examples of the preceding network include but are not limited to, the Internet, an intranet, a local area network, a mobile communication network, and a combination thereof.

An embodiment of this application also provides a storage medium. The storage medium stores a computer program that, when executed by a processor, causes the processor to implement the feedback resource determination method according to any embodiment of this application. The method includes the following: In each resource block set included in a data resource pool, a first feedback resource set corresponding to each subband is determined, where the first feedback resource set includes at least one feedback resource, the at least one feedback resource includes K dedicated PRBs, and K is a positive integer. Based on subband information and resource block set information of received data, a second feedback resource set is determined, where the second feedback resource set includes at least one first feedback resource set. A feedback resource is determined in the second feedback resource set, and physical sidelink feedback information is transmitted through N shared PRBs and the feedback resource, where N is a positive integer.

A computer storage medium in this embodiment of this application may adopt any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared, or semiconductor system, apparatus, or device, or any combination thereof. Examples (a non-exhaustive list) of the computer-readable storage medium include an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical memory device, a magnetic memory device, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

The program codes included on the computer-readable medium may be transmitted on any suitable medium including, but not limited to, a wireless medium, a wire, an optical cable, a radio frequency (RF), or any suitable combination thereof.

Computer program codes for performing the operations of this application may be written in one or more programming languages or a combination of multiple programming languages. The programming languages include object-oriented programming languages such as Java, Smalltalk, and C++ and may also include conventional procedural programming languages such as "C" or similar programming languages. The program codes may be executed entirely on a user computer, partly on a user computer, as a stand-alone software package, partly on a user computer and partly on a remote computer, or entirely on a remote computer or a server. In a case related to the remote computer, the remote computer may be connected to the user computer via any type of network including a local area network (LAN) or a wide area network (WAN) or may be connected to an external computer (for example, via the Internet by an Internet service provider).

The preceding descriptions are only example embodiments of this application and are not intended to limit the scope of this application.

It is to be understood by those skilled in the art that the term user terminal encompasses any suitable type of wireless user device, for example, a mobile phone, a portable data processing apparatus, a portable web browser, or a vehicle-mounted mobile station.

Generally speaking, various embodiments of this application may be implemented in hardware or special-purpose circuits, software, logic, or any combination thereof. For example, some aspects may be implemented in hardware while other aspects may be implemented in firmware or software executable by a controller, a microprocessor, or another computing apparatus, though this application is not limited thereto.

Embodiments of this application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of this application may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), and an optical memory apparatus and system (a digital video disc (DVD) or a compact disk (CD)). The computer-readable medium may include a non-transitory storage medium. The data processor may be of any type suitable for a local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A feedback resource determination method, the method being applied to a first terminal and comprising:

    determining, in each resource block set comprised in a data resource pool, a first feedback resource set corresponding to each subband, wherein the first feedback resource set comprises at least one feedback resource, the at least one feedback resource comprises K dedicated physical resource blocks (PRBs), and K is a positive integer;
    determining, based on subband information and resource block set information of received data, a second feedback resource set, wherein the second feedback resource set comprises at least one first feedback resource set; and
    determining a feedback resource in the second feedback resource set, and transmitting physical sidelink feedback information through N shared PRBs and the feedback resource, wherein N is a positive integer.

2. The method according to claim 1, wherein the N shared PRBs are N PRBs comprised in an interlace of a predefined, preconfigured, or configured data resource block set; or
the N shared PRBs are N PRBs in a data resource block set determined based on a predefined, preconfigured, or configured bitmap.

3. The method according to claim 1, further comprising:
grouping PRBs, other than shared PRBs, that are available for transmitting physical sidelink feedback information in each resource block set, wherein every K PRBs form a group, and remaining PRBs fewer than K are not used for transmitting physical sidelink feedback information.

4. The method according to claim 3, wherein grouping the PRBs, other than the shared PRBs, that are available for transmitting the physical sidelink feedback information in the each resource block set comprises:
for PRBs, other than shared PRBs, that are available for transmitting physical sidelink feedback information in each resource block set, grouping, according to an interlace index, ungrouped PRBs within an interlace into groups of K PRBs in order of PRB indices, wherein X remaining PRBs in the interlace and Y PRBs in a next interlace form a group, wherein $X < K$, $Y < K$, and $X + Y = K$.

5. The method according to claim 4, wherein determining, in the each resource block set comprised in the data resource pool, the first feedback resource set corresponding to the each subband comprises:

allocating $M_{\text{subch, slot}}^{\text{PSFCH}}$ groups of PRBs with a group index of

$$\left[\left(i + j \cdot N_{\text{PSSCH}}^{\text{PSFCH}}\right) \cdot M_{\text{subch, slot}}^{\text{PSFCH}}, \left(i + 1 + j \cdot N_{\text{PSSCH}}^{\text{PSFCH}}\right) \cdot M_{\text{subch, slot}}^{\text{PSFCH}} - 1\right]$$ in $M_{\text{PRB, set}}^{\text{PSFCH}}$ groups of PRBs in each resource block set to a subband j in a slot $i$ as a first feedback resource set corresponding to the subband j in the slot $i$, wherein a group index of the $M_{\text{PRB, set}}^{\text{PSFCH}}$ groups of PRBs ranges from 0 to $M_{\text{PRB, set}}^{\text{PSFCH}} - 1$,

$M_{\text{subch, slot}}^{\text{PSFCH}} = M_{\text{PRB, set}}^{\text{PSFCH}} / \left(N_{\text{subch}} \cdot N_{\text{PSSCH}}^{\text{PSFCH}}\right)$, $0 \le i < N_{\text{PSSCH}}^{\text{PSFCH}}$, $0 \le j < N_{\text{subch}}$, $N_{\text{subch}}$ is a number of subbands in the resource block set, $N_{\text{PSSCH}}^{\text{PSFCH}}$ is a physical sidelink feedback channel (PSFCH) period in the data resource pool, and an allocation rule is to prioritize ascending order of i and then ascending order of *j*.

6. The method according to claim 4, wherein determining, based on the subband information and resource block set information of the received data, the second feedback resource set comprises:

   for received data comprising M resource block sets and H subbands, using a first feedback resource set corresponding to a first subband in a first resource block set as the second feedback resource set, wherein a number of groups in the second feedback resource set is $M_{\text{subch, slot}}^{\text{PSFCH}}$;
   or,
   for received data comprising M resource block sets and H subbands, using all first feedback resource sets corresponding to each subband in each resource block set among the M resource block sets and the H subbands as the second feedback resource set, wherein a number of groups in the second feedback resource set is

   $\text{M*H*}M_{\text{subch, slot}}^{\text{PSFCH}}$;

   wherein M and H are each a positive integer.

7. The method according to claim 3, wherein determining a feedback resource in the second feedback resource set comprises:
   determining, according to a resource determination rule, a group of PRBs from the second feedback resource set as the K dedicated PRBs.

8. The method according to claim 1, further comprising:
   dividing PRBs, other than shared PRBs, that are available for transmitting physical sidelink feedback information in each resource block set into K groups with an equal number of PRBs according to PRB index order, wherein remaining PRBs fewer than K are not used for transmitting physical sidelink feedback information.

9. The method according to claim 8, wherein determining, in the each resource block set comprised in the data resource pool, the first feedback resource set corresponding to the each subband comprises:

   allocating $M_{\text{subch, slot}}^{\text{PSFCH}}$ PRBs with an index of

   $$\left[\left(i + j \cdot N_{\text{PSSCH}}^{\text{PSFCH}}\right) \cdot M_{\text{subch, slot}}^{\text{PSFCH}}, \left(i + 1 + j \cdot N_{\text{PSSCH}}^{\text{PSFCH}}\right) \cdot M_{\text{subch, slot}}^{\text{PSFCH}} - 1\right]$$ in $M_{\text{PRB, set}}^{\text{PSFCH}}$ PRBs in each group in each resource block set to a subband j in a slot $i$ as the first feedback resource set corresponding to the subband j in the slot $i$, wherein an index of the $M_{\text{PRB, set}}^{\text{PSFCH}}$ PRBs ranges from 0 to

   $M_{\text{PRB, set}}^{\text{PSFCH}} - 1$, $M_{\text{subch, slot}}^{\text{PSFCH}} = M_{\text{PRB, set}}^{\text{PSFCH}} / \left(N_{\text{subch}} \cdot N_{\text{PSSCH}}^{\text{PSFCH}}\right)$, $0 \le i < N_{\text{PSSCH}}^{\text{PSFCH}}$, $0 \le j < N_{\text{subch}}$,

   $N_{\text{subch}}$ is a number of subbands in the resource block set, $N_{\text{PSSCH}}^{\text{PSFCH}}$ is a PSFCH period in the data resource pool, and an allocation rule is to prioritize ascending order of *i* and then ascending order of *j*; or

   allocating $M_{\text{subch, slot}}^{\text{PSFCH}}$ PRBs with an index of

   $$\left[\left(i + j \cdot N_{\text{PSSCH}}^{\text{PSFCH}}\right) \cdot M_{\text{subch, slot}}^{\text{PSFCH}}, \left(i + 1 + j \cdot N_{\text{PSSCH}}^{\text{PSFCH}}\right) \cdot M_{\text{subch, slot}}^{\text{PSFCH}} - 1\right]$$ in $M_{\text{PRB, set}}^{\text{PSFCH}}$ PRBs in a first group in each resource block set to a subband j in a slot $i$ as the first feedback resource set corresponding to the subband j in the slot $i$, wherein the first feedback resource set is a PRB set within the first group, an index of the

$M_{\mathrm{PRB,\,set}}^{\mathrm{PSFCH}}$ PRBs ranges from 0 to $M_{\mathrm{PRB,\,set}}^{\mathrm{PSFCH}}-1$, $M_{\mathrm{subch,\,slot}}^{\mathrm{PSFCH}} = M_{\mathrm{PRB,\,set}}^{\mathrm{PSFCH}}/\left(N_{\mathrm{subch}} \cdot N_{\mathrm{PSSCH}}^{\mathrm{PSFCH}}\right)$, $0 \leq i < N_{\mathrm{PSSCH}}^{\mathrm{PSFCH}}$, $0 \leq j < N_{\mathrm{subch}}$, $N_{\mathrm{subch}}$

is a number of subbands in the resource block set, $N_{\mathrm{PSSCH}}^{\mathrm{PSFCH}}$ is a PSFCH period in the data resource pool, and an allocation rule is to prioritize ascending order of $i$ and then ascending order of $j$.

10. The method according to claim 9, wherein determining, based on the subband information and resource block set information of the received data, the second feedback resource set comprises:

for received data comprising M resource block sets and H subbands, using a first feedback resource set corresponding to a first subband in a first resource block set as the second feedback resource set, wherein a number of PRBs in a group in the second feedback resource set is $M_{\mathrm{subch,\,slot}}^{\mathrm{PSFCH}}$, corresponding to $M_{\mathrm{subch,\,slot}}^{\mathrm{PSFCH}}$ feedback resources; or

or,

for received data comprising M resource block sets and H subbands, using all first feedback resource sets corresponding to each subband in each resource block set among the M resource block sets and the H subbands as the second feedback resource set, wherein a number of PRBs in a group in the second feedback resource set is $H*M_{\mathrm{subch,\,slot}}^{\mathrm{PSFCH}}$, and the second feedback resource set comprises a total of $M*H*M_{\mathrm{subch,\,slot}}^{\mathrm{PSFCH}}$ feedback resources;

wherein M and H are each a positive integer.

11. The method according to claim 9, wherein determining a feedback resource in the second feedback resource set comprises:

determining, according to a resource determination rule, a feedback resource from the second feedback resource set, and finally determining K PRBs as the K dedicated PRBs.

12. The method according to claim 11, wherein determining, according to the resource determination rule, a feedback resource from the second feedback resource set and finally determining the K PRBs comprises:

determining, according to the resource determination rule, a feedback resource in the second feedback resource set, wherein the feedback resource comprises K dedicated PRBs distributed across the K groups, and the K dedicated PRBs have a same index within each of the K groups of PRBs in the resource block set, and finally determining the K PRBs; or

determining, according to the resource determination rule, a PRB with an index i in a first group of the K groups of PRBs, determining PRBs with the index i in other (K-1) groups in the resource block set as dedicated PRBs, and finally determining the K dedicated PRBs; or

determining, according to the resource determination rule, a PRB with an index i in a first group of the K groups of PRBs, determining PRBs with an index $i+(\mathrm{m}-1)*M_{\mathrm{PRB,\,set}}^{\mathrm{PSFCH}}$ in the resource block set as dedicated PRBs, and finally determining the K dedicated PRBs, wherein m > 1 and m ≤ K; or

determining, according to the resource determination rule, a PRB with an index i in a first group of the K groups of PRBs, determining PRBs with an index $i+\mathrm{m}*M_{\mathrm{PRB,\,set}}^{\mathrm{PSFCH}}$ in the resource block set as dedicated PRBs, and finally determining the K dedicated PRBs, wherein m > 0 and m ≤ K-1.

13. The method according to claim 7 or 11, wherein the resource determination rule comprises:

determining K PRBs or one PRB based on a resource identifier in the received data, a number of cyclic shift pairs configured or preconfigured by a system, a member identifier of a data receiving node, and a number of feedback resources in the second feedback resource set or a number of PRBs in a group in the second feedback resource set.

14. The method according to claim 1, further comprising:

puncturing a shared PRB that satisfies a specific condition in a case where a bandwidth between any shared PRB in the resource block set and any of the K dedicated PRBs is less than a set threshold.

15. The method according to claim 14, wherein in a case where a subcarrier spacing (SCS) is a first value, an n-th interlace in the resource block set is a shared PRB, and a number of shared PRBs of the n-th interlace in the resource block set is a specified value, a shared PRB that does not satisfy the specific case is not punctured in the following manners:

in a case where a PRB with a largest index among the K dedicated PRBs comprises an (85+n)-th PRB, retaining a (90+n)-th shared PRB without puncturing, wherein $n \geq 1$ and $n \leq 10$;
in a case where a PRB with a largest index among the K dedicated PRBs comprises an (86+n)-th PRB, retaining a (90+n)-th shared PRB without puncturing, wherein $n \geq 1$ and $n \leq 10$;
in a case where a PRB with a largest index among the K dedicated PRBs comprises an (87+n)-th PRB, retaining a (90+n)-th shared PRB without puncturing, wherein $n \geq 1$ and $n \leq 10$;
in a case where a PRB with a smallest index among the K dedicated PRBs comprises a (5+n)-th PRB, retaining an n-th shared PRB without puncturing, wherein $n \geq 1$ and $n \leq 10$;
in a case where a PRB with a smallest index among the K dedicated PRBs comprises a (4+n)-th PRB, retaining an n-th shared PRB without puncturing, wherein $n \geq 1$ and $n \leq 10$; and
in a case where a PRB with a smallest index among the K dedicated PRBs comprises a (3+n)-th PRB, retaining an n-th shared PRB without puncturing, wherein $n \geq 1$ and $n \leq 10$.

16. The method according to claim 14, wherein in a case where an SCS is a second value, an x-th interlace in the resource block set is a shared interlace, and a number of shared PRBs of the x-th interlace in the resource block set is a specified value, a shared PRB that does not satisfy the specific case is not punctured in the following manners:

in a case where a PRB with a largest index among the K dedicated PRBs comprises a (43+m)-th PRB, retaining a (45+m)-th shared PRB without puncturing, wherein $x \geq 1$ and $x \leq 5$; and
in a case where a PRB with a smallest index among the K dedicated PRBs comprises a (2+m)-th PRB, retaining an m-th shared PRB without puncturing, wherein $x \geq 1$ and $x \leq 5$.

17. A communication node, comprising: a memory and at least one processor; wherein

the memory is configured to store at least one program; and
the at least one program, when executed by the at least one processor, causes the at least one processor to implement the feedback resource determination method according to any one of claims 1 to 16.

18. A computer-readable storage medium configured to store a computer program that, when executed by a processor, implements the feedback resource determination method according to any one of claims 1 to 16.

Frequency
domain

RB Set
*N*-1

⋮

RB Set 2

⋮

RB Set 1

⋮

RB Set 0

BWP

Interlace *M*
Interlace 2
Interlace 1
Interlace 0

**FIG. 1**

RB Set k

Shared
interlace PRB

Dedicated
PRB of UE1

Dedicated
PRB of UE2

**FIG. 2**

Determine, in each resource block set included in a data resource pool, a first feedback resource set corresponding to each subband, where the first feedback resource set includes at least one feedback resource, the at least one feedback resource includes K dedicated PRBs, and K is a positive integer — S110

Determine, based on subband information and resource block set information of received data, a second feedback resource set, where the second feedback resource set includes at least one first feedback resource set — S120

Determine a feedback resource in the second feedback resource set and transmit physical sidelink feedback information through N shared PRBs and the feedback resource, where N is a positive integer — S130

**FIG. 3**

Group 1    Group 3              Group 2    Group 4

0 1 2 3 4 0 1 2 3 4 0 1 2 3 4 0 1 2 3 4 0 1 2 3 4 0 1 2 3 4 0 1 2 3 4 0 1 2 3 4 0 1 2 3 4 0 1 2 3 4 0 1 2 3 4 0 1 2 3 4

Group 5    Group 7              Group 6  Group 8

RB Set k

Shared PRB                          Dedicated PRB

**FIG. 4**

**FIG. 5**

**FIG. 6**

FIG. 7

FIG. 8

RB Set k

1M HZ 1M HZ

0123456789 1111111111122222222223333333334 · · · · · · · · · · · · · · · · · · 888888888889
0123456789012345678901234567890 · · · · · · · · · · · · · · · · · · 012345678990

Shared PRB

Dedicated PRB

**FIG. 9**

RB Set k

1M HZ   1M HZ

0123456789 1111111111222222222233333333334
          01234567890123456789012345678901234567890

888888888889
01234567890

Shared PRB

Dedicated
PRB

FIG. 10

HARQ of
PSSCH1
and
PSSCH2

PSFCH feedback
occasion

**FIG. 11**

HARQ of
PSSCH1

PSSCH 1

PSSCH 2

HARQ of
PSSCH2

PSFCH feedback
occasion

**FIG. 12**

b11

b10

b9

HARQ of
PSSCH1

b8

b7

PSSCH 1　　　　PSSCH 2

b6

a5

HARQ of
PSSCH2

a4

a3

a2

a1

PSFCH feedback
occasion

**FIG. 13**

310　　　　　　320　　　　　　330

| First determination module | Second determination module | Third determination module |

**FIG. 14**

**FIG. 15**

## INTERNATIONAL SEARCH REPORT

| International application No. |
| --- |
| **PCT/CN2024/083917** |

### A. CLASSIFICATION OF SUBJECT MATTER

H04L 1/1812(2023.01)i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS; CNTXT; ENTXT; ENTXTC; 3GPP; IEEE: 链路反馈信道, 侧链路, 边链路, 旁链路, 独享, 专用, 共享, 交织, 物理资源块, 占用信道带宽, 资源块, 子带, COMMON, OCB, PRB, PSD, PSFCH, RB, SHARED, SUBBAND, SUBCHANNEL, UNSHARED, SUB BAND, RESOURCE POOL, DEDICATED PRB, RESOURCE BLOCK?

### C. DOCUMENTS CONSIDERED TO BE RELEVANT

| Category* | Citation of document, with indication, where appropriate, of the relevant passages | Relevant to claim No. |
| --- | --- | --- |
| A | CN 115915261 A (ZTE CORP.) 04 April 2023 (2023-04-04)<br>entire document | 1-18 |
| A | CN 115915397 A (VIVO COMMUNICATION TECHNOLOGY CO., LTD.) 04 April 2023 (2023-04-04)<br>entire document | 1-18 |
| A | WO 2023011454 A1 (VIVO MOBILE COMMUNICATION CO., LTD.) 09 February 2023 (2023-02-09)<br>entire document | 1-18 |
| A | ZTE, Sanechips. "Discussion on physical layer structures and procedures for SL-U"<br>*3GPP TSG RAN WG1 #112, R1-2300355*, 17 February 2023 (2023-02-17),<br>entire document | 1-18 |
| A | Apple. "Discussion on Sidelink Physical Channel Design Framework for Unlicensed Spectrum"<br>*3GPP TSG RAN WG1 #112, R1-2301347*, 16 February 2023 (2023-02-16),<br>entire document | 1-18 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 June 2024** | **22 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/083917**

| Patent document cited in search report | | | Publication date (day/month/year) | Patent family member(s) | | | Publication date (day/month/year) |
|---|---|---|---|---|---|---|---|
| CN | 115915261 | A | 04 April 2023 | None | | | |
| CN | 115915397 | A | 04 April 2023 | None | | | |
| WO | 2023011454 | A1 | 09 February 2023 | US | 2024172254 | A1 | 23 May 2024 |

Form PCT/ISA/210 (patent family annex) (July 2022)